(19) Europäisches Patentamt
European Patent Office
Office européen des brevets

(11) Veröffentlichungsnummer: **0 339 310 B1**

(12) **EUROPÄISCHE PATENTSCHRIFT**

(45) Veröffentlichungstag der Patentschrift: **02.12.92**

(51) Int. Cl.[5]: **D21H 19/44**, C01F 11/46, C09C 1/02

(21) Anmeldenummer: **89105931.3**

(22) Anmeldetag: **05.04.89**

# (54) Wässrige Dispersion von Gips und deren Verwendung als Füllstoff und Streichpigment bei der Papier- und Kartonherstellung.

(30) Priorität: **08.04.88 DE 3811763**

(43) Veröffentlichungstag der Anmeldung:
**02.11.89 Patentblatt 89/44**

(45) Bekanntmachung des Hinweises auf die Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**EP-A- 0 216 516**
**FR-A- 2 317 246**
**GB-A- 2 173 781**
**GB-B- 1 121 367**
**US-A- 2 284 585**

(73) Patentinhaber: **Jungbunzlauer Ladenburg GmbH**
**Dr. Albert Reimann-Strasse 18**
**W-6802 Ladenburg/Neckar(DE)**

(72) Erfinder: **Klötzer, Erhard, Dr.**
**Schauenburgstrasse 33**
**W-6901 Dossenheim(DE)**
Erfinder: **Kioustelidis, Johannes, Dr.**
**Trajanstrasse 36**
**W-6802 Ladenburg(DE)**
Erfinder: **Schmidt, Günter**
**Georg-Herwegh-Strasse 14**
**W-6700 Ludwigshafen(DE)**

(74) Vertreter: **Grussdorf, Jürgen, Dr. et al**
**Patentanwälte Zellentin & Partner Rubensstrasse 30**
**W-6700 Ludwigshafen(DE)**

**EP 0 339 310 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft stabilisierte wäßrige Dispersionen von Gips und ihre Verwendung als Füllstoff in Streichpigmenten bei der Papier- und Kartonherstellung.

Wäßrige Dispersionen von feinteiligem Gips ($CaSO_4$ x $2H_2O$) oder Kreide ($CaCO_3$) oder Kaolin ($Al_2O_3$ x $2SiO_2$ x $2H_2O$) werden als Füllstoffe und als Beschichtungmasse bei der Papier- und Kartonherstellung eingesetzt. Wäßrige Dispersionen von Gips haben jedoch nur beschränkte Anwendung gefunden, da es schwierig ist, Aufschlämmungen mit einem ausreichend hohen Gipsgehalt herzustellen, welche gleichzeitig eine für die Weiterverarbeitung notwendige niedrige Viskosität sowie hohe Stabilität aufweisen. Für die Weiterverarbeitung werden bei solchen Dispersionen normalerweise Trockengehalte von 60-80 Gew.-% Feststoff neben Viskositäten von unter 300 mPas, vorzugsweise unter 200 mPas gefordert, während die Dispersion auch nach längerem Stehen praktisch nicht sedimentieren soll bzw. ein Sediment durch Wiederaufrühren vollständig redispergiert werden können soll.

Als Gipspigment kann entweder feingemahlener Naturgips oder ein in der chemischen Industrie als Abfallprodukt, beispielsweise in der Rauchgasentschwefelung, bei der Phosphorsäure, Milchsäure- oder Zitronensäureherstellung anfallender Gips verwendet werden. Wegen der höheren Reinheit und Homogenität gewinnt der Chemiegips stärker an Bedeutung.
Zur Verwendung als Pigment werden diese Produkte trocken oder naß auf Teilchengrößen von unter 20 $\mu$m, vorzugsweise unter 10 $\mu$m aufgemahlen, wobei ein Anteil an Teilchen unter 2 $\mu$m 50 %, in vielen Fällen 70 % erforderlich ist. Da wäßrige Aufschlämmungen mit Trockengehalten von ca. 70 % ohne Zusätze feste Kuchen darstellen, ist es notwendig, diese Mischungen durch Zusätze zu plastifizieren. Es ist dazu seit langem üblich, Dispergiermittel, wie Carboxymethylcellulose, Polyacrylate oder geeignete anionische, oberflächenaktive Verbindungen zuzusetzen. Als Wirkmechanismus wird angenommen, daß sich diese anionischen Verbindungen auf der Oberfläche der feinen Pigmentpartikel anlagern und durch ihre Ladung eine elektrostatische Abstoßung der verschiedenen Partikel voneinander bewirken. Zusätzlich ist es üblich, niedermolekulare organische oder anorganische Komplexbildner zuzufügen, wobei anorganische Phosphate, wie Pyrophosphat, Hexametaphosphat oder Phosphonate besonders bevorzugt werden. Zusätzlich zu den vorgenannten oberflächenaktiven anionischen Verbindungen und Komplexiermitteln kann die Aufschlämmung gegebenenfalls übliche Additive, beispielsweise Bakterizide, Entschäumungsmittel, pH-Regler und Stabilisatoren enthalten. In manchen Fällen kann die mit den Dispergiermitteln allein erzielte Stabilisierung durch Zusatz von ergänzenden Stabilisatoren noch zusätzlich verbessert werden. Als solche Stabilisatoren haben sich hauptsächlich Tone und viskositätserhöhende Mittel, wie Celluloseether, wie z.B. Carboxymethylcellulose, Methylcellulose und Hydroxyethylcellulose, bewährt. Die genannten Stabilisatoren werden in einer Menge von 0,02-0,5, insbesondere 0,05-0,3 Gew.-% der Aufschlämmung zugesetzt.

In vielen Fällen ist es vorteilhaft, Gips nicht in reiner Form, sondern als Mischung mit Kreide oder Kaolin einzusetzen, wodurch verbesserte Pigmentwirkungen erzielt werden können. Die Mischung kann hergestellt werden, indem man eine trockene Aufmahlung der einen Komponente einer wäßrigen Aufschlämmung der anderen zusetzt, zwei wäßrige Aufschlämmungen der beiden Komponenten miteinander vermischt.

Problematisch bei all diesen Aufschlämmungen ist neben der Erreichung eines ausreichend hohen Feststoffgehaltes die Viskosität so niedrig zu halten, daß die Produkte sich einwandfrei verarbeiten lassen und lagerstabil sind, d.h. nicht sedimentieren.

Aus der DE-A 36 12 087 ist es bekannt geworden, daß eine Kombination einer oberflächenaktiven Alkylbenzolsulfonsäure in Kombination mit einem anorganischen Phosphat oder einer organischen Aminverbindung als Komplexiermittel in einer Menge von 0,5-2 %, bezogen auf den Feststoffgehalt, in der Lage ist, eine Dispersion von Gips oder Kreide mit einem Trockengehalt von 65-75 % herzustellen. Viskositäten von 140 bis ca. 1.000 mPas, gemessen in einem Brookfield-Viskosimeter werden dabei erreicht. Diese Viskosität ist für viele Verarbeitungszwecke teilweise zu hoch. Andererseits wird aus diesen Dispersionen in etwa 24 Std. ein nicht vollständig wieder aufrührbares Sediment abgeschieden.

Aus der GB-A 2179956 ist ferner bekannt geworden, Kaolin oder Kreide in Mischung mit Gips zu suspendieren und als Dispersionsmittel neben Carboxymethylcelluose (CMC), Stärke und Polyacrylaten auch saure Phosphorsäureester einzusetzen, die mit Alkyl-, Aryl-, Aralkyl- oder Alkylarylgruppen verestert sind, welche nicht mehr als 10 C-Atome enthalten sollen. Die untersuchten relativ dünnen Suspensionen mit nur 56 % Feststoff weisen jedoch bereits Viskositäten von 55-160 mPas auf und erweisen sich nicht als stabil, da sie Sedimente bilden.

Es stellt sich daher die Aufgabe, andere Dispersionsmittel zu finden, welche bei gleicher oder höherer Feststoffkonzentration geringe Viskositäten und höhere Stabilität ergeben. Insbesondere sind Stabilitäten von mindestens 3 Wochen und die Redispergierung eventueller Sedimente erforderlich.

Umfangreiche Versuche mit verschiedenen Netzmitteln, Dispergiermitteln, viskositätsregulierenden Stoffen und anderen allein oder auch in Kombination, erbrachten gegenüber diesem Stand der Technik keine ausreichende Verbesserung.

Überraschenderweise wurde nun gefunden, daß eine kleine Gruppe oberflächenaktiver, anionischer Verbindungen hervorragend geeignet ist, um wäßrige Dispersionen von Gips zu stabilisieren. Es handelt sich dabei um saure Phosphorsäureester, wie sie in den Ansprüchen näher gekennzeichnet sind.

Diese Produkte senken in Mengen von 0,1-1 %, insbesondere in Gegenwart von Komplexierungsmitteln, wie Phosphorsäure oder Polyphosphorsäure und/oder Polyacrylaten oder anderen Netzmitteln die Viskosität von wäßrigen Gipsdispersionen mit Konzentrationen von 65-75 % auf Werte von 10-200 mPas. Auch nach Stehen über 2-3 Wochen erhält man Viskositäten von 50-300 mPas, wobei gleichzeitig die entsprechenden Dispersionen stabil bleiben, d.h. keine oder nur eine geringe Sedimentation aufweisen, die sich durch Aufrühren vollständig zurückführen läßt. Diese Dispersionen bleiben daher voll verarbeitungsfähig.

Die erfindungsgemäßen Phosphorsäureester enthalten eine oder zwei Estergruppen, die gleich oder verschieden sein können. Bifunktionelle Alkohole können dabei auch mit zwei verschiedenen Phosphorsäureresten verbunden sein. Die Alkylpolyoxyethyl- bzw. Alkylpolyoxypropylreste haben 2-30, bevorzugt 10-20 Alkoxygruppen und im Alkylrest 8-24, vorzugsweise 10-15 C-Atome. In den Alkylphenylgruppen hat der Alkylrest 2-10 C-Atome und die Oxyalkylgruppen sind vorzugsweise Oxyethyl-, Oxypropyl- oder Oxyisopropylgruppen bzw. Mischungen derselben.

Das in den erfindungsgemäßen Dispersionen enthaltene feinteilige Gipsmaterial wird vorzugsweise durch eine Naßmahlung in einer Perlkugelmühle oder durch Trockenaufmahlung erhalten. Soweit Gemische von Gips mit Kreide oder Kaolin dispergiert werden sollen, kann dies durch Mischen wäßriger Dispersionen erfolgen.

Die erfindungsgemäßen Dispersionen können als Hilfs- oder Zusatzstoffe weiterhin herkömmliche Dispersionsmittel, wie Acrylate, herkömmliche Komplexierungsmittel, wie anorganische Phosphate, Phosphonsäuren, Citrate, Gluconate, organische Sulfate oder Sulfonate sowie bekannte Stabilisierungsmittel, beispielsweise Polysaccharide und/oder Celluloseether enthalten.

Als komplexierende Phosphate haben sich Tetranatriumpyrophosphat, Natriumhexametaphosphat, Trinatriumphosphat, Natrium hydrogenpyrophosphat, Natriumtripolyphosphat bewährt.

Als zusätzliche Stabilisatoren sind insbesondere solche Stoffe zu verwenden, die in niederen Konzentrationen Gele bilden, welche unter geringen Scherkräften wieder aufbrechen, wodurch die Dispersion im Ruhestand stabilisiert und im Bearbeitungszustand nicht in ihrer Viskosität allzusehr erhöht wird. Zu nennen sind in diesem Zusammenhang neben den Celluloseethern, wie Carboxymethylcellulose, Methylcellulose und Hydroxyethylcellulose und Hydroxypropylcellulose noch die Polysaccharide, wie Guar, Xanthan, Johannisbrotmehl sowie ihre Derivate, z.B. Carboxymethyl- oder Hydroxyalkylderivate und in gewissem Umfang Stärke und Stärkederivate und Eiweißprodukte, wie Gelatine, Peptin oder Algin.

Die Dispersionen werden normalerweise auf einen pH-Wert von 8-10 eingestellt. Soweit dieser durch die Ausgangsprodukte nicht automatisch eingestellt wird, kann eine entsprechende Menge Natronlauge, Kalilauge, Ammoniak, Natrium- oder Kaliumcarbonat zugefügt werden. Beim Alkalisieren mit Laugen hat sich ein pH-Wert von 9-10, bei Carbonaten von 8-9 als besonders vorteilhaft zur Herstellung stabiler Dispersionen herausgestellt.

Die Eigenschaften der erfindungsgemäßen Dispersionen sind im folgenden anhand einiger Versuchsbeispiele näher erläutert, ohne daß dadurch die Erfindung in irgendeiner Weise beschränkt werden soll.

## Beispiele

100 Teile feinteiliger Gips aus einer Trockenmahlung

oder

100 Teile feinteiliger Gips aus einer Naßmahlung und auf eine TS von 74 % auf einer Filterpresse abgepreßt, werden mit der entsprechenden Menge Wasser, mit der oberflächenaktiven anionischen Verbindung in Form eines Phosphorsäureesters versetzt, gegebenenfalls zusätzlich ein Dispergiermittel in Form eines Acrylats und gegebenenfalls ein Komplexiermittel in Form eines anorganischen Phosphats und gegebenenfalls ein zusätzliches Stabilisierungsmittel zugegeben. Die Mischung wird mit Natriumhydroxyd oder Soda auf einen pH von 9,5 gebracht und unter schnellem Rühren dispergiert. (Die zugesetzten Hilfsmittel sind jeweils auf den Gehalt an Gips in Gew.-% bezogen.)

Die Teilchengröße der Gipspigmente liegt zwischen 1 bis 25 µm, wobei 98 % unter 10 µm liegen.

Die Viskositäten der erhaltenen Dispersion werden mit einem Haake Rotationsviskosimeter "Viskotester VT 23" bei Stufe 1 (23,1 U/min) Prüfkörper MV II nach 1 Stunde und 21 Tagen untersucht.

Die Stabilität wird nach 21 Tagen visuell in einem Glas mit 65 mm Höhe und 60 mm Durchmesser auf Wasserüberstand (W) und mit Hilfe eines Glasstabs ohne Aufrühren auf eventuell vorhandenes Sediment (S) untersucht. Unter Sediment wird in diesem Zusammenhang ein verhärteter, zäher Bodensatz, welcher sich von der Dispersion abhebt, verstanden. Am Untersuchungsende wird die Redispergiermöglichkeit (A) durch Verrühren mit dem Glasstab überprüft.

Mit + ist dabei eine vollständige Redispergierung, mit - ein Zurückbleiben eines eventuellen Sediments bezeichnet.

Die Ergebnisse der Versuche sind in den folgenden Tabellen dargestellt.

<u>Tabelle 1</u> Stabilität von Gispsuspensionen mit verschiedenen Zusätzen
Gips trockengemahlen

| Gipskonz. % | Phosphors. ester (1) % | Zusatz Dispergator % | Zusatz Komplexbildner % (2) | Zusatz Verdicker/ Netzmittel | Viskosität mPas | | Stabilität | | |
|---|---|---|---|---|---|---|---|---|---|
| | | | | | 1 h | 21 d | W mm | S mm | A |
| 68 | - | 0,7 (3) | 0,1 | - | 668 | | 7 (6) | 5 (6) | - (6) |
| " | - | 0,7 (4) | 0,1 | - | 520 | | 16 (6) | alles (6) | - (6) |
| " | - | 0,7 (5) | 0,1 | - | 178 | 950 | 5 | 0 | + |
| " | 0,7 | - | - | - | 104 | 312 | 4 | 0 | + |
| " | 0,7 | - | 0,1 | - | 45 | 134 | 7 | 1 | + |
| " | " | - | 0,1 | 0,1 (7) | 149 | 342 | 1 | 1 | + |
| " | " | - | " | 0,2 (8) | 15 | 270 | 7 | 2 | + |
| " | " | - | " | 0,2 (9) | 163 | 193 | 2 | 0 | + |
| " | " | - | " | 0,2 (10) | 59 | 193 | 8 | 0 | + |
| " | " | - | " | 0,2 (11) | 45 | 267 | 6 | 1 | + |

<u>Tabelle 2</u> Stabilität von Gipsdispersionen (verschiedene Phosphorsäureester und Konzentrationen) Gips trockengemahlen

| Gipskonzentration | Phosphorsäureester (1) | Polyacrylat (3) | Komplexbildner (2) | Viskosität nach 1 h | Viskosität nach 21 d | Stabilität W | Stabilität S | Stabilität A |
|---|---|---|---|---|---|---|---|---|
| % | % | % | % | mPas | mPas | mm | mm | |
| 67 | 0,7 | - | - | 140 | 350 | 4 | <1 | + |
| 67 | 0,7 | - | 0,1 | 119 | | 6 | <1 | + |
| 68 | 0,4 | 0,1 | - | 45 | 193 | 8 | <1 | + |
| 72 | 0,9 | - | - | 74 | 223 | 2 | <1 | + |
| 72 | 0,9 | - | 0,1 | 59 | 193 | 3 | <1 | + |
| 75 | 0,9 | - | 0,1 | 208 | 579 | 0 | <1 | + |
| 78 | 0,9 | - | 0,1 | 475 | | 0 | <1 | + |
| 68 | 0,5 (12) | 0,1 | - | 45 | 460 | 6 | <1 | + |
| 68 | 0,8 (13) | 0,1 | - | 35 | | | | |
| 68 | 0,3 (1) + 0,3 (14) | 0,1 | 0,3 | 40 | | | | |
| 68 | 1,0 (15) | 0,1 | - | 80 | | | | |
| 68 | 0,3 (1) + 0,3 (15) | 0,1 | - | 95 | | | | |

Tabelle 3 Gips Naßmahlung mit Dispergiermittel

| Gips % | | Phosphorsäureester % (1) | Polyacrylat % (3) | Viskosität | | Stabilität 14 d | | |
|---|---|---|---|---|---|---|---|---|
| | | | | 1 h | 14 d | W mm | S mm | A |
| I | 71 | 0,5 | 0,4 | 30 | 60 | 2 | <1 | + |
| II | 71 | 0,5 | 0,4 | 60 | 80 | 2 | <1 | + |
| III | 71 | 0,5 | 0,4 | 160 | 200 | 2 | <1 | + |

I = einmaliger Durchgang durch Rührwerksperlkugelmühle (Teilchengröße kleiner als 2 µm 30 %)

II = zweimaliger Durchgang durch Rührwerksperlkugelmühle (Teilchengröße kleiner als 2 µm 45 %)

III = dreimaliger Durchgang durch Rührwerksperlkugelmühle (Teilchengröße kleiner als 2 µm 55 %)

In den vorstehenden Tabellen wurden folgende Abkürzungen verwendet:

(1) Lutensit A-EP: sauer Phosphorsäureester eines Fettalkoholalkoxylates; $C_{13/15}$-Fettalkohol mit 18...20 Alkylenoxidgruppen (Ethylenoxid/Propylenoxid : 2 : 1)

(2) Mittel bis hochmolekulares Natriumpolyphosphat

(3) Lastaron 891 (niedermolekulares Natriumpolyacrylat 40 % in Wasser)

(4) Dodecylbenzolsulfonat (DE-A 36 12 087)

(5) Gemisch aus Mono- und Diphosphorsäureester von Laurylalkohol mit 4 Ethylenoxidgruppen

(6) nach 14 d

(7) Guarmehl

(8) vorverkleistertes acetyliertes Distärkephosphat

(9) Relatin 700 58 (Na-Carboxymethylcellulose)

(10) Präpagen WK (Distearyldimethylammoniumchlorid)

(11) Lutensol AP 10 (Alkylphenolalkoxylat)

(12) Marlowet 5300 (sauerer Nonylphenolpolyglykolether-phosphorsäureester mit ca. 10 Alkylenoxid-Gruppen)

(13) Monophosphorsäureester von N,N'-Di(2-Hydroxyäthyl)-harnstoff

(14) Monophosphorsäureester von Oleyl-di(2-hydroxyäthyl)-amin

(15) Monophosphorsäureester von Stearylaminethoxylat (10 Ethylenoxydgruppen)

## Patentansprüche

1. Wäßrige Dispersion von Gips, welche neben Calciumsulfat-Dihydrat eine oberflächenaktive anionische Verbindung sowie gegebenenfalls weitere Hilfsstoffe enthält, dadurch gekennzeichnet, daß die oberflächenaktive Verbindung ein sauren Phosphorsäureester der allgemeinen Formel I und/oder II

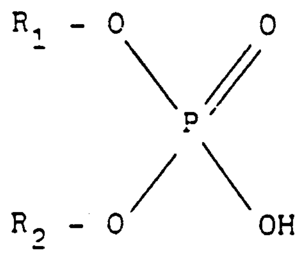
(I)

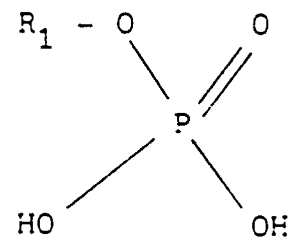
(II)

in welchen $R_1$ und $R_2$ gleich oder verschieden sind und Alkylpoly(oxyethylen)-, Alkylpoly(oxypropylen)-, Alkylphenoxyalkyl- oder Alkylphenylpolyoxyalkyl-gruppen bedeuten, ein Monophosphorsäureester von Mono- oder Dihydroxyalkyl-harnstoffen oder von alkoxylierten Mono- oder Dihydroxyalkylharnstoffen oder Monophosphorsäureester von polyalkoxylierten Aminen ist, wobei mehrere Hydroxyl-gruppen mit Phosphorsäure verestert sein können.

**2.** Dispersion gemäß Anspruch 1, dadurch gekennzeichnet, daß der Phosphorsäureester in einer Menge von 0,1-2 %, vorzugsweise 0,2-1 %, enthalten ist.

**3.** Dispersion gemäß Anspruch 1 oder 2, dadurch gekennzeichnet, daß sie einen Feststoffgehalt von 65-80 % bei einer mittleren Teilchengröße von 2-10 µm aufweist.

**4.** Dispersion nach einem der Ansprüche 1-3, dadurch gekennzeichnet, daß zusätzlich ein Calcium-Komplexierungsmittel, vorzugsweise ein anorganisches Phosphat in einer Menge von 0,1-2 %, vorzugsweise 0,2-1 %, enthalten ist.

**5.** Dispersion nach einem der Ansprüche 1-4, dadurch gekennzeichnet, daß 0,1-2 % Polyacrylat als zusätzliches Dispergiermittel enthalten ist.

**6.** Dispersion nach einem der Ansprüche 1-5, dadurch gekennzeichnet, daß ein zusätzlicher Stabilisator in einer Menge von 0,02-0,5 % enthalten ist.

**7.** Verwendung von Dispersionen gemäß einem der Ansprüche 1-6 als Füllstoffe und Streichpigmente bei der Papier- und Kartonherstellung.

**Claims**

**1.** Aqueous dispersion of gypsum which, besides calcium sulphate dihydrate, contains a surface-active anionic compound, characterised in that the surface-active compound is an acidic phosphoric acid ester of the general formula I and/or II

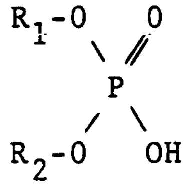
(I)

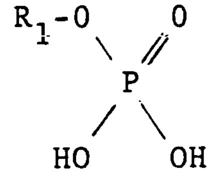
(II)

in which $R_1$ and $R_2$ are the same or different and signify alkylpoly(oxyethylene), alkylpoly-(oxypropylene), alkylphenoxyalkyl or alkylphenylpolyoxyalkyl groups, or is a monophosphoric acid ester of a mono- or dihydroxyalkylurea or of an alkoxylated mono- or dihydroxyalkylurea or is a monophosphoric acid ester of a polyalkoxylated amine, whereby several hydroxyl groups can be esterified with phosphoric acid.

**2.** Dispersion according to claim 1, characterised in that the phosphoric acid ester is contained in an amount of 0.1 - 2%, preferably of 0.2 - 1%.

**3.** Dispersion according to claim 1 or 2, characterised in that it has a solids content of 65 - 80% in the case of an average particle size of 2 - 10 µm.

**4.** Dispersion according to one of claims 1 - 3, characterised in that additionally a calcium complexing agent, preferably an inorganic phosphate, is present in an amount of 0.1 - 2%, preferably of 0.2 - 1%.

**5.** Dispersion according to one of claims 1 - 4, characterised in that 0.1 - 2% of polyacrylate is present as additional dispersion agent.

**6.** Dispersion according to one of claims 1 - 5, characterised in that an additional stabiliser is present in an amount of 0.02 - 0.5%.

**7.** Use of dispersions according to one of claims 1 - 6 as fillers and coating pigments in the production of paper and cardboard.

**Revendications**

**1.** Dispersion aqueuse de gypse, qui, outre du dihydrate de sulfate de calcium, contient un composé tensio-actif anionique ainsi qu'éventuellement d'autres adjuvants, caractérisée en ce que le composé tensio-actif est un ester acide d'acide phosphorique répondant aux formules générales I et/ou II

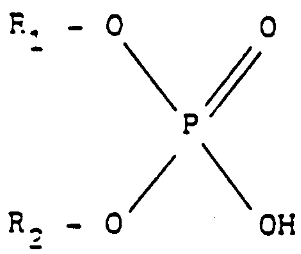 (I) 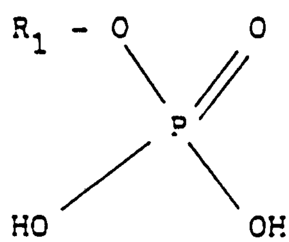 (II)

dans lesquelles $R_1$ et $R_2$ sont identiques ou différents et représentent des groupes alkylpoly-(oxyéthylène)-, alkylpoly-(oxypropylène)-, alkylphénoxyalkyle ou alkylphénylpolyoxyalkyle, ou est un ester d'acide monophosphorique de monohydroxyalkylurées ou de dihydroxyalkylurées ou de monohydroxyalkylurées ou dihydroxyalkylurées alcoxylées ou est un ester d'acide monophosphorique d'amines polyalcoxylées, plusieurs groupes hydroxyle pouvant être estérifiés par de l'acide phosphorique.

**2.** Dispersion suivant la revendication 1, caractérisée en ce que l'ester d'acide phosphorique est contenu en une quantité de 0,1-2 %, de préférence de 0,2-1 %.

**3.** Dispersion suivant l'une des revendications 1 et 2, caractérisée en ce qu'elle présente une teneur en matière solide de 65 à 80 % pour une dimension moyenne des particules de 2 à 10 µm.

**4.** Dispersion suivant l'une des revendications 1 à 3, caractérisée en ce qu'en supplément elle contient un agent de complexation du calcium, de préférence un phosphate inorganique, en une quantité de 0,1 à 2 %, de préférence de 0,2 à 1 %.

**5.** Dispersion suivant l'une des revendications 1 à 4, caractérisée en ce que 0,1 à 2 % de polyacrylate sont contenus comme agent dispersant supplémentaire.

**6.** Dispersion suivant l'une des revendications 1 à 5, caractérisée en ce qu'un agent stabilisant supplémentaire est contenu en une quantité de 0,02 à 0,5 %.

**7.** Utilisation de dispersions suivant l'une des revendications 1 à 6, comme matières de charge et pigments d'enduction dans le cas de la fabrication du papier et du carton.